# EUROPEAN PATENT APPLICATION

(11) **EP 1 854 756 A1**
(43) Date of publication of application: **14.11.2007**
(21) Application number: 06713593.9
(22) Date of filing: 13.02.2006
(51) Int. Cl.: B66B 3/00

(54) **ELEVATOR CAR INSIDE DISPLAY**

(30) Priority: 03.03.2005 JP 2005058959
(71) Applicant: MITSUBISHI ELECTRIC CORPORATION, Chiyoda-ku Tokyo 100-8310 (JP)
(72) Inventor: CHIBA, Yuji, uchi 2-chome, Chiyoda-ku, Tokyo, 1008310 (JP)
(74) Representative: HOFFMANN EITLE
(86) International application number: PCT/JP2006/302451
(87) International publication number: WO 2006/092951

(57) **Abstract**

A display device in an elevator cage displays information based on audio broadcasting without having to input character data so that emergency occasions can be addressed.

Audio data broadcast by the broadcasting station 1 is received by data receiving means 21, the audio data received by audio recognizing means 22 is converted into text data, a keyword is extracted from the text data using keyword pattern recognition control means 23, a predetermined sentence corresponding to the extracted keyword is extracted by referring to a keyword data storing unit 24 that stores predetermined keywords and a predetermined sentence data storing unit 25 that stores predetermined sentences, selecting between the extracted predetermined sentence and the text data using a display data output control unit 27 for display at a message display unit 3 provided in the cage 3.

## Description

### Technical Field

The present invention relates to a display device provided in an elevator cage to carry out information display.

### Background Art

Patent Document 1 discloses a conventional elevator information display device for use in an elevator cage that converts audio data received through a telephone line from a remote monitoring center into character data by audio recognizing means and displays the data using a display unit provided inside the elevator cage.
Patent Document 2 discloses an elevator system that reads out materials from material storing means based on a registration table in response to an input keyword and produces and displays a series of environmental video pieces.
Patent Document 3 discloses an elevator information providing system that displays character data received from character broadcasting, converts the character data into audio data, and outputs the data as audio sounds.

Patent Document 1: JP-A-09-77398 (pp.3 to 5, Fig. 1)
Patent Document 2: JP-A-08-223482 (pp.4 to 5, Fig. 1)
Patent Document 3: JP-A-2002-114457 (pp.3 to 6, Fig. 2)

### Disclosure Of the Invention

### Problems to be Solved by the Invention

However, according to the disclosure of Patent Document 1, audio data is received through a telephone line, which makes it necessary to dial all the way to a remote monitoring center or the like and this creates a considerable loss of time. The conventional device uses a telephone line, which is costly, and the line should be connected to the cage of an elevator. Therefore, the method is not exactly advantageous in terms of installation as well as maintenance.
According to the disclosure of Patent Document 2, -sentences must be input using a PC (personal computer) or the like, which is not suitable for emergency use.
According to the disclosure of Patent Document 3, character data for character broadcasting must be input, which is also unsuitable for emergency use.

The invention is directed to a solution to the above described problems, and it is an object of the invention to provide a display device in an elevator cage that displays information based on audio broadcasting without having to input character data so that the emergency occasions can be addressed.

### Means for Solving the Problems

A display device in an elevator cage according to the invention includes data receiving means for receiving audio data broadcast by a broadcasting station, audio recognizing means for recognizing the audio data received by the data receiving means and converting the data into text data, and a message display unit provided in the elevator cage to carry out display based on the text data converted by the audio recognizing means.

### Advantages of the Invention

As described above, according to the invention, the display device includes the data receiving means for receiving audio data transmitted by the broadcasting station, the audio recognizing means for recognizing audio data received by the data receiving means and converting the data into text data, and the message display unit provided in the elevator cage to carry out display based on the text data converted by the audio recognizing means. In this way, the information may be displayed in the elevator cage based on the audio broadcasting without inputting character data.

### Best Mode for Carrying Out the Invention

### First Embodiment

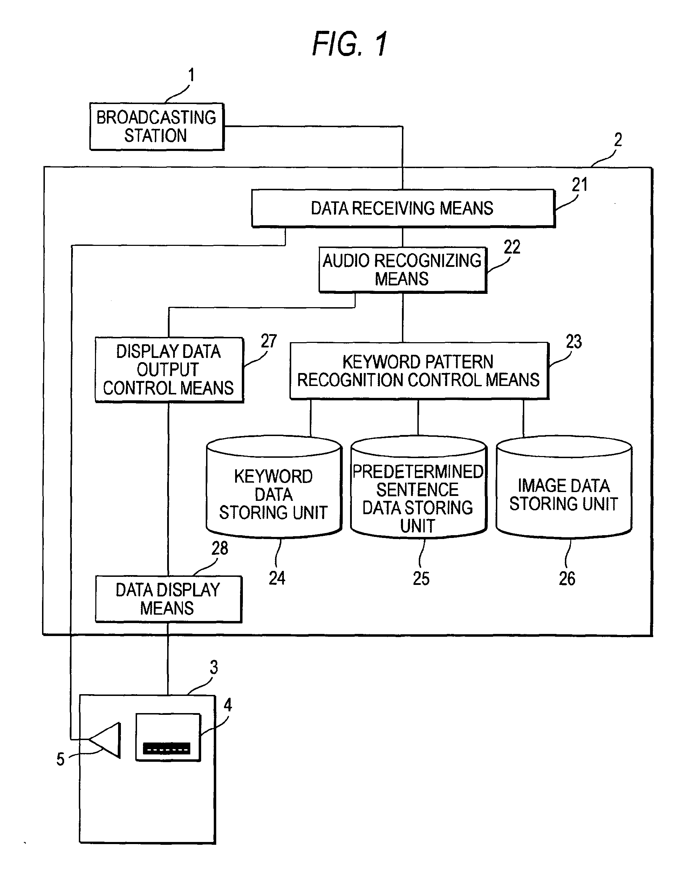

Fig. 1 is a diagram of a display device in an elevator cage for indoor broadcasting according to a first embodiment of the invention.
In Fig. 1, a broadcasting station 1 transmits various kinds of information by indoor broadcasting in a building in which an elevator is provided. A data converter 2 receives various kinds of audio data transmitted from the broadcasting station 1 and transmits display data based on the audio data to a message display unit 4 provided in a cage 3. The message display unit 4 is provided in the cage 3 to display data such as text data transmitted from the broadcasting station 1. A speaker 5 (audio output device) is provided in the cage 3 to output the audio data transmitted from the broadcasting station 1.

The data converter 2 has the following structure.
Data receiving means 21 receives various kinds of audio data from the broadcasting station 1. Audio recognizing means 22 recognizes the audio data received by the data receiving means 21 and converts the data into text data. Keyword pattern recognition control means 23 extracts a keyword (word) from the text data converted and transmitted by the audio recognizing means 22, checks with a database that stores keywords or combines keywords and then extracts a predetermined sentence corresponding to the keyword or the combination of keywords from a database that stores predetermined sentences. Image data corresponding to the keyword is extracted from an image data database.

A keyword data storing unit 24 is a database that stores various keywords, and a predetermined sentence data storing unit 25 is a database that stores predetermined sentences in the form of text data corresponding to the keywords stored by the keyword data storing unit 24. An image data storing unit 26 is a database that stores image data associated with keywords or predetermined sentences corresponding to the keywords and the predetermined sentences.
Display data output control means 27 controls whether to directly output text data converted by the audio recognizing means 22 to the message display unit 4 or output a predetermined sentence or image data output from the keyword pattern recognition control means 23 to the message display unit 4. Data display means 28 transmits the display data output from the display data output control means 27 to the message display unit 4.

Now, the operation of displaying audio broadcasting from the broadcasting station at the message display unit in the display device in the elevator cage for indoor broadcasting will be described.
As soon as indoor audio broadcasting is carried out from the broadcasting station 1, the same audio broadcasting is transmitted to the data converter 2.
The audio data transmitted to the data converter 2 is received by the data receiving means 21 and directly output to a speaker 5 if the speaker 5 is provided inside the cage 3.
The audio data is transmitted to the audio recognizing means 22 at the same time, and the audio recognizing means 22 recognizes the received audio data, converts the data into text data and transmits the converted text data to the keyword pattern recognition control means 23.

The keyword pattern recognition control means 23 extracts keywords from the transmitted text data and checks for each keyword with the keyword data storing unit 24 that stores predetermined keywords. Based on the result of checking, a predetermined sentence corresponding to the checked keywords is extracted from the predetermined sentence data storing unit 25 that stores predetermined sentences. At the same time, image data corresponding to the keywords or the predetermined sentence is extracted from the image data storing unit 26 that stores predetermined images and the extracted data is transmitted to the display data output control means 27.
The display data output control means 27 controls whether to directly output the text data converted by the audio recognizing means 22 to the message display unit 4 or output the predetermined sentence or the image data output from the keyword pattern recognition control means 23 to the message display unit 4. The display data output from the display data output control means 27 is displayed at the message display unit 4 provided in the cage 3 through the data display means 28.

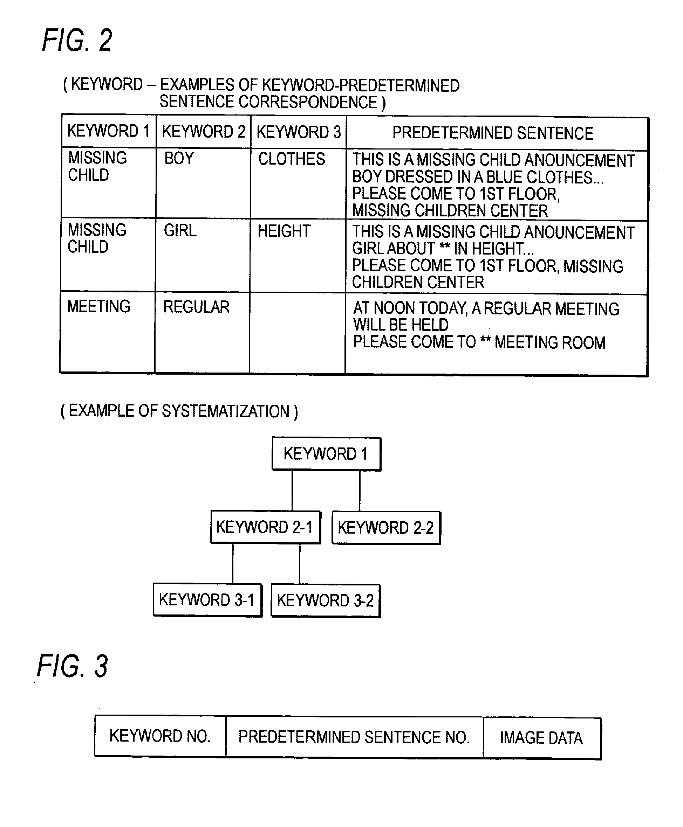

Fig. 2 shows the association between keywords and predetermined sentences in the data converter in the display device in the elevator cage for indoor broadcasting according to the first embodiment of the invention.
Fig. 2 shows keywords and predetermined sentences corresponding to these keywords.
The keyword data storing unit 24 systematically stores keywords rather than storing all the keywords. As shown in Fig. 2, when a missing child announcement is to be made, a major keyword may be "missing child," whether the missing child is a "girl" or "boy" is a sub division, and a further characteristic is the clothes that the child is wearing or the height of the child.
The predetermined sentence data storing unit 25 stores predetermined sentences that can possibly be composed based on systematized keyword groups. If for example there is only one keyword "missing child," a predetermined sentence "this is a missing child announcement" is employed. If another keyword "boy" is added, the sentence would be "this is an announcement for a missing boy." The latter is stored by the predetermined sentence data storing unit 25 as a further detailed predetermined sentence.
The keyword pattern recognition control means 23 can obtain a further detailed predetermined sentence based on the systematized keywords by referring to the keyword data storing unit 24 and the predetermined sentence data storing unit 25.

Fig. 3 shows the association between a keyword and a predetermined sentence and image data in the data converter in the display device in the elevator cage for indoor broadcasting according to the first embodiment of the invention.
In Fig. 3, the keyword, the predetermined sentence, and the image data are associated with one another.
Using a characteristic keyword such as "missing child" in the above example as a key, corresponding image data is stored in the image data storing unit 26.
Similarly, corresponding image data pieces are also allocated to predetermined sentences as keys, so that image data corresponding to a keyword or a predetermined sentence can be extracted.

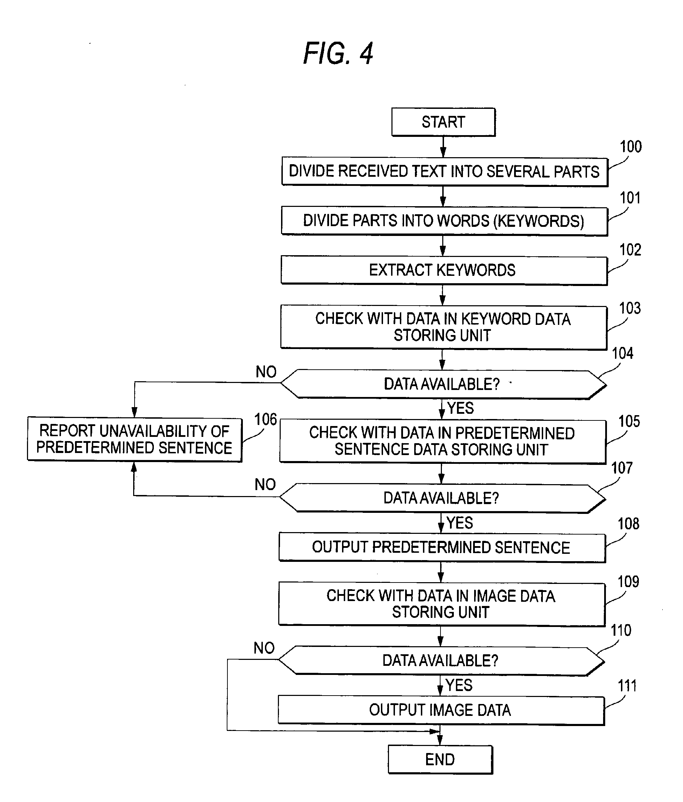

Fig. 4 is a flowchart for use in illustrating the basic operation of the keyword pattern recognition control means in the data converter in the display device in the elevator cage for indoor broadcasting according to the first embodiment of the invention.
When text data output from the audio recognizing means 22 is received, the keyword pattern recognition control means 23 is activated.
In step 100, the received text data is divided into several parts (such as paragraphs). In step 101, the text data divided in step 100 is further divided on the basis of words, and keywords are extracted in step 102.
Once the keywords are extracted, the keywords are subjected to pattern recognition with keyword groups stored by the keyword data storing unit 24 in step 103. The process proceeds to step 105 if there is a matching keyword (step 104) and to step 106 if not (step 104).
In step 105, in order to extract a predetermined sentence based on the keywords, a matching expression is extracted from the predetermined sentence group corresponding to the keywords stored in the predetermined sentence data storing unit 25. The process proceeds to step 108 if a corresponding predetermined sentence is available (step 107) and to step 106 if not (step 107).

In step 108, the matching predetermined sentence is output to the display data output control means 27 and the process proceeds to step 109.
In step 106, since there is no matching keyword or predetermined sentence, the display data output control means 27 is notified of the absence of a corresponding predetermined sentence.
In step 109, based on the management numbers of the keywords and the predetermined sentence, the image data storing unit 26 is checked for corresponding image data. The process proceeds to step 111 if corresponding image data is available (step 110) and the process ends if not (step 110).
In step 111, the found image data is output to the display data output control means 27 and the process ends.

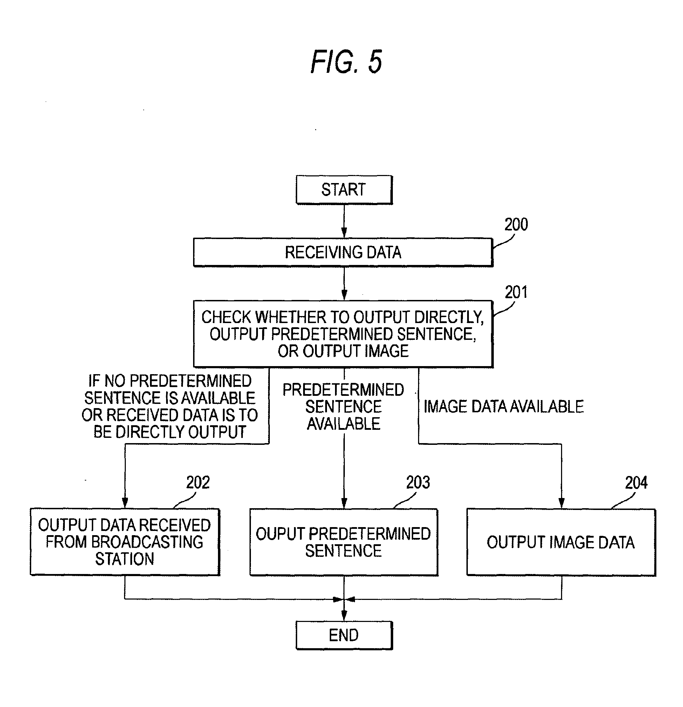

Fig. 5 is a flowchart for use in illustrating the basic operation of the display data output control means in the data converter in the display device in the elevator cage for indoor broadcasting according to the first embodiment of the invention.
In step 200, data is received from the audio recognizing means 22 or the keyword pattern recognition control means 23, and in step 201 the kind of the received data is identified. More specifically, it is determined whether to directly output the text data converted by the audio recognizing means 22 or to output the predetermined sentence or image data output from the keyword pattern recognition control means 23.
In step 201, if it is determined that the text data converted by the audio recognizing means 22 is to be directly output or no corresponding predetermined sentence is available, the process proceeds to step 202. If a corresponding predetermined sentence is available, the process proceeds to step 203. If corresponding image data is available, the process proceeds to step 204.
In step 202, the text data converted by the audio recognizing means 22 is directly output to the data display means 28, and the process ends. In step 203, the received predetermined sentence is output to the data display means 28 and the process ends. In step 204, the received image data is output to the data display means 28, and the process ends.

According to the first embodiment, information not easy to hear is displayed in the cage, so that the user can be aware of the information in real time while taking the elevator.
A predetermined sentence corresponding to keywords is displayed, and therefore wrong messages are less likely to be displayed, so that accurate information can be conveyed.
When audio data is too long to be displayed as it is at the message display unit in the form of text data, the information can be simplified into predetermined sentences, which makes it easier to convey the information.

A signal line for audio transmission from the broadcasting station is not connected, so that the disadvantage associated with installation such as wiring can be eliminated, which is advantageous in terms of maintenance.
Cases in which information may be better conveyed by images can be addressed, so that information can be more clearly conveyed.
A radio device can be used for data transmission/reception, so that the first embodiment can be achieved simply by adding a radio device to the equipment from the broadcasting station, which is advantageous in terms of maintenance.

### Brief Description of the Drawings

Fig. 1 is a configuration diagram of a display device in an elevator cage for indoor broadcasting according to a first embodiment of the invention;
Fig. 2 shows the association between keywords and predetermined sentences in the data converter in the display device in the elevator cage for indoor broadcasting according to the first embodiment of the invention;
Fig. 3 shows the association between a keyword and a predetermined sentence and image data in the data converter in the display device in the elevator cage for indoor broadcasting according to the first embodiment of the invention;
Fig. 4 is a flowchart illustrating the basic operation of keyword pattern recognition control means in the data converter in the display device in the elevator cage for indoor broadcasting according to the first embodiment of the invention; and
Fig. 5 is a flowchart illustrating the basic operation of display data output control means in the data converter in the display device in the elevator cage for indoor broadcasting according to the first embodiment of the invention.

### Description of Reference Characters

- 1: broadcasting station
- 2: data converter
- 3: cage
- 4: message display unit
- 5: speaker
- 21: data receiving means
- 22: audio recognizing means
- 23: keyword pattern recognition control means
- 24: keyword data storing unit
- 25: predetermined sentence data storing unit
- 26: image data storing unit
- 27: display data output control means
- 28: data display means

## Claims

1. A display device in an elevator cage, comprising: data receiving means for receiving audio data broadcast by a broadcasting station;
audio recognizing means for recognizing the audio data received by the data receiving means and converting the data into text data; and
a message display unit provided in the elevator cage to display a message based on the text data converted by the audio recognizing means.

2. The display device in an elevator cage according to claim 1, further comprising:
a keyword data storing unit that stores predetermined keywords;
a predetermined sentence data storing unit that stores predetermined sentences corresponding to the keywords-stored by the keyword data storing unit; and
keyword pattern recognition control means for extracting a keyword from the text data converted by the audio recognizing means, extracting a predetermined sentence corresponding to the extracted keyword by referring to the keyword data storing unit and the predetermined sentence data storing unit based on the extracted keyword,
the message display unit displaying the predetermined sentence extracted by the keyword pattern recognition control means.

3. The display device in an elevator cage according to claim 1, further comprising:
a keyword data storing unit that stores predetermined keywords;
a predetermined sentence data storing unit that stores predetermined sentences corresponding to the keywords stored by the keyword data storing unit;
keyword pattern recognition control means for extracting a keyword from the text data converted by the audio recognizing means by referring to the keyword data storing unit and the predetermined sentence data storing unit based on the extracted keyword; and
a display data output control unit that selects between the predetermined sentence extracted by the keyword pattern recognition control means and the text data converted by the audio recognizing means,
the message display unit displaying the predetermined sentence or the text data selected by the display data output control unit.

4. The display device in an elevator cage according to claim 2 or 3, further comprising an image data storing unit that stores image data corresponding to keywords stored by the keyword data storing unit, wherein the keyword pattern recognition control means extracts image data corresponding to the extracted keyword, and the message display unit displays the extracted image data.

5. The display device in an elevator cage according to any one of claims 1 to 4, further comprising an audio output device that outputs audio data received by the data receiving means.

6. The display device in an elevator cage according to any one of claims 1 to 5, wherein the data receiving means receives the audio data transmitted by wireless.
